# EUROPEAN PATENT APPLICATION

(11) **EP 3 926 106 A1**
(43) Date of publication of application: **22.12.2021**
(21) Application number: 20774527.4
(22) Date of filing: 03.03.2020
(51) Int. Cl.: E02F 9/20

(54) **CONSTRUCTION MACHINE**

(30) Priority: 19.03.2019 JP 2019051127
(71) Applicant: KOBELCO CONSTRUCTION MACHINERY CO., LTD., Hiroshima-shi Hiroshima 731-5161 (JP)
(72) Inventor: YOKOTA, Jumpei, Hiroshima-shi, Hiroshima 731-5161 (JP); INAOKA, Tomoko, Hiroshima-shi, Hiroshima 731-5161 (JP)
(74) Representative: TBK
(86) International application number: PCT/JP2020/008968
(87) International publication number: WO 2020/189261

(57) **Abstract**

In a construction machine (1), an electric application instruction detection section (63) detects an electric application instruction of starting an electric application to an electronic device requiring operation confirmation prior to a start of an engine (2). A timer section (65) measures an elapsed time from a start of the electric application to the electronic device. A battery control section (62) is configured to execute a control of starting the electric application to the electronic device in response to a detection of the electric application instruction. An engine control section (61) is configured to execute a control of starting the engine (2) in a case where a start manipulation is received by a start manipulation receipt part (3) before the elapsed time exceeds a first reference time (T1) set in advance. A control device (6) is configured to execute a control of suppressing a power consumption of a battery (4), when at least one power consumption suppression condition set in advance is satisfied after the electric application to the electronic device is started and before the engine (2) is started.

## Description

### Technical Field

The present invention relates to a construction machine.

### Background Art

Construction machines include ones each adopting a push start switch as a manipulation way of starting an engine (e.g., see Patent Literature 1). In such a construction machine of the push start type, an operation confirmation for an electronic device is executed prior to a start of the engine to check whether a software for an electronic control and the electronic device accurately operate. Specifically, in the construction machine of the push start type, for example, after sitting on an operator seat, an operator makes a turn-on manipulation (e.g., a manipulation for a rotation lever around a push start button, and a manipulation to start an electric application to devices). In response to the manipulation, an electric power in a battery is supplied to the electronic device to start the electric application to the electronic device. In this manner, the operation confirmation for the electronic device is executed. After the operation confirmation is executed, the operator makes a pushing manipulation (a start manipulation) of pushing the push start button, thereby starting the engine.

However, in an actual work site, the operator may make a different operation or manipulation other than the start manipulation after starting the electric application to the electronic device by making the turn-on manipulation. In this case, there is a problem that the electric application to the electronic device continues even during the different operation or manipulation, wasting the electric power in the battery and reducing the residual amount thereof in the battery.

### Citation List

### Patent Literature

Patent Literature 1: Japanese Unexamined Patent Publication No. 2016-113772

### Summary of Invention

An object of the present invention is to provide a construction machine which can suppress a reduction in a residual amount in a battery after an electric application to an electronic device is started.

A provided construction machine includes: an engine; a start manipulation receipt part for receiving a start manipulation to start the engine; a battery for supplying an electric power; and a control device. The control device includes: an engine control section for controlling the engine; a battery control section for controlling the supply of the electric power from the battery; an electric application instruction detection section for detecting an electric application instruction of starting electric application to an electronic device by supplying the electric power from the battery to the electronic device, the electronic device requiring operation confirmation prior to the start of the engine; and a timer section for measuring an elapsed time from a start of the electric application to the electronic device. The battery control section is configured to execute a control of starting the electric application to the electronic device by supplying the electric power from the battery to the electronic device in response to a detection of the electric application instruction by the electric application instruction detection section. The engine control section is configured to execute a control of starting the engine in a case where the start manipulation is received by the start manipulation receipt part before the elapsed time exceeds a first reference time set in advance. The control device is configured to execute a control of suppressing a power consumption of the battery, when at least one power consumption suppression condition set in advance is satisfied after the electric application to the electronic device is started and before the engine is started.

Another construction machine to be provided includes: an engine; a battery for supplying an electric power; and a control device. The control device includes: an engine control section for controlling the engine; a battery control section for controlling the supply of the electric power from the battery; and an electric application instruction detection section for detecting an electric application instruction of starting electric application to an electronic device by supplying the electric power from the battery to the electronic device, the electronic device requiring operation confirmation prior to the start of the engine. The battery control section is configured to execute a control of starting the electric application to the electronic device by supplying the electric power from the battery to the electronic device in response to a detection of the electric application instruction by the electric application instruction detection section. The engine control section is configured to execute a control of starting the engine in response to a completion of the operation confirmation after the electric application to the electronic device.

### Brief Description of Drawings

FIG. 1 is a block diagram showing a configuration of a controller of a hydraulic excavator according to a first embodiment.
FIG. 2 is a flowchart showing a process executed by the controller according to the first embodiment.
FIG. 3 is a flowchart showing a process executed by a controller according to a second embodiment.
FIG. 4 is a flowchart showing a process executed by a controller according to a third embodiment.
FIG. 5 is a flowchart showing a process executed by a controller according to a fourth embodiment.
FIG. 6 is a block diagram showing a configuration of a controller according to a fifth embodiment.
FIG. 7 is a flowchart showing a process executed by the controller according to the fifth embodiment.
FIG. 8 is a schematic view illustrating a first reference range and a second reference range according to a sixth embodiment.
FIG. 9 is a flowchart showing a process executed by a controller according to the sixth embodiment.
FIG. 10 is a flowchart showing a process executed by a controller according to a seventh embodiment.
FIG. 11 is a flowchart showing a process executed by a controller according to a modification.

### Description of Embodiments

### First Embodiment

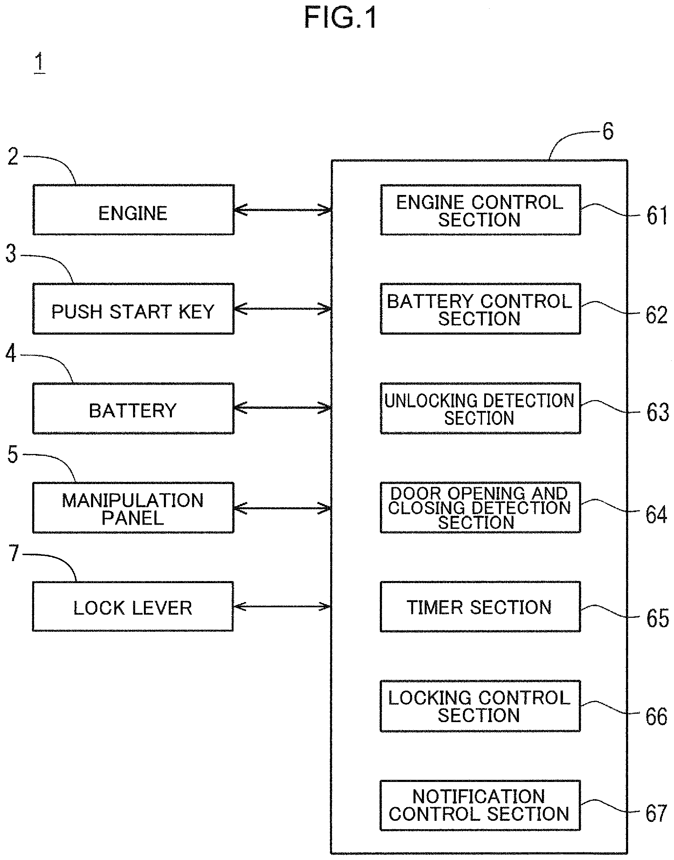

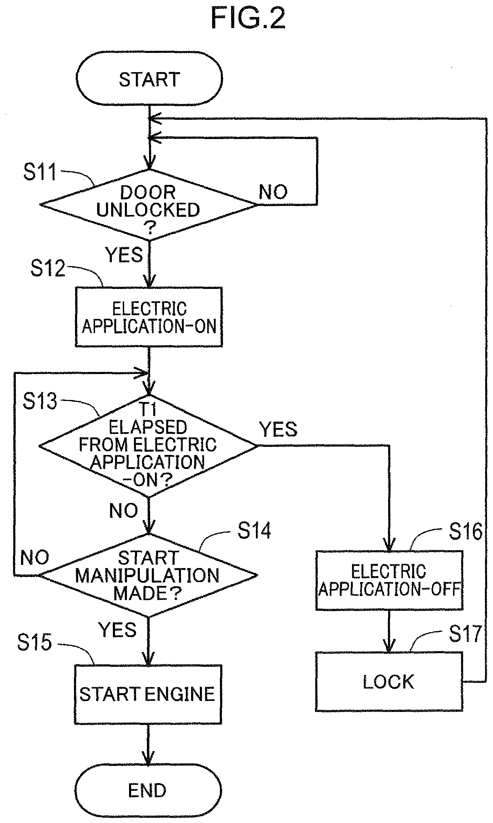

A hydraulic excavator 1 according to a first embodiment of the present invention will be described with reference to FIGS. 1 and 2. The hydraulic excavator 1 shown in the block diagram in FIG. 1 represents an example of a construction machine. However, the construction machine is not limited to the hydraulic excavator 1, but may be another construction machine, e.g., a crane, and a bulldozer.

The hydraulic excavator 1 includes an engine 2, a push start key 3, a battery 4, a manipulation panel 5, and a controller 6.

The push start key 3 is a manipulation key for receiving a start manipulation by a worker to start the engine 2, and represents an example of a start manipulation receipt part. When receiving the start manipulation by a worker, the push start key 3 outputs a signal indicating that the start manipulation is received to the controller 6 (specifically, a main control part included in the controller 6 to be described later). The worker includes a worker relevant to a work conducted by the hydraulic excavator 1, e.g., an operator who maneuvers the hydraulic excavator 1, a work manager of the work conducted by the hydraulic excavator 1, a work assistant of the work, and a worker engaged in maintenance of the hydraulic excavator 1. The start manipulation is mainly made by an operator, but may be made by a worker engaged in maintenance for the maintenance of the hydraulic excavator 1.

The battery 4 is a power source configured to supply an electric power to an electronic device group including one or more electronic devices and to apply electricity to each electronic device in the electronic device group. The battery 4 is composed of a storage battery.

Each electronic device in the electronic device group requires an operation confirmation prior to a start of the engine 2. Examples of the electronic device include a mechatronic controller, an ECU (Engine Control Unit), and a monitor. However, the electronic device is not limited thereto. Examples of the monitor includes the manipulation panel 5 shown in FIG. 1.

The operation confirmation includes, for example, checking whether the electronic device operates accurately, and checking whether a software for an electronic control of the electronic device operates accurately. At least one of the controller 6 shown in FIG. 1 and another controller executes a process for the operation confirmation preliminarily set for each electronic device in the electronic device group. In the execution of the process of the operation confirmation by the another controller, upon completion of the process of the operation confirmation for the electronic device, a signal indicating the completion of the process of the operation confirmation is input from the electronic device or the another controller to the controller 6.

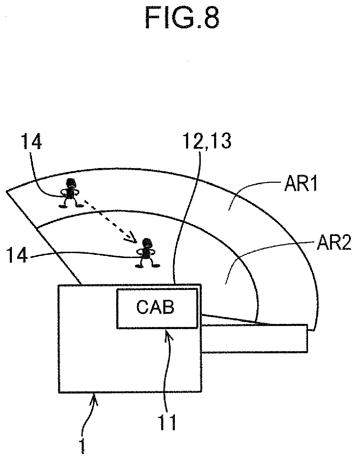

The manipulation panel 5 includes a touch screen which can display various kinds of information and receive a manipulation (touching manipulation) by an operator. The manipulation panel 5 is not limited to the touch screen, and may include a display panel other than the touch screen. The manipulation panel 5 is provided in a cab 11 (see FIG. 8).

As shown in FIG. 8, the hydraulic excavator 1 includes the cab 11. The cab 11 has a door 12 which can open and close an entrance to the cab 11, and a door lock 13 which can lock the door 12. FIG. 8 illustrates a sixth embodiment to be described later. The cab 11, the door 12, and the door lock 13 are provided not only in the hydraulic excavator 1 according to the sixth embodiment but also in hydraulic excavator 1 according to the remaining embodiments including the first embodiment.

The controller 6 is a device for controlling various operations of the hydraulic excavator 1, and represents an example of a control device. The controller 6 includes the main control part, a plurality of detection sections, and a timer section 65.

The main control part includes a CPU (Central Processing Unit), a ROM (Read Only Memory), and a RAM (Random Access Memory). The main control part includes an engine control section 61, a battery control section 62, a locking control section 66, and a notification control section 67. The main control part operates so that each of the engine control section 61, the battery control section 62, the locking control section 66, and the notification control section 67 comes into effect when the CPU executes a corresponding control program.

The detection sections include an unlocking detection section 63 and a door opening and closing detection section 64.

The engine control section 61 is a processing section for controlling a driving state of the engine 2. The engine control section 61 can execute a control of starting the engine 2 in a stopped state and stopping the engine 2 in a driving state.

The control executed by the engine control section 61 for starting the engine 2 may include, for example, the following control. Specifically, the hydraulic excavator 1 further includes, for example, a starter, and a first power supply shift part. The starter serves as a motor for starting the engine 2. The first power supply shift part serves as an electric circuit component configured to be shiftable between a permission state of permitting a supply of the electric power from the battery 4 to the starter and a suspension state of suspending the supply of the electric power from the battery 4 to the starter. The engine control section 61 can drive the starter to start the engine 2 by outputting an instruction signal for shifting the first power supply shift part from the suspension state to the permission state for a supply of the electric power from the battery 4 to the starter. However, the control executed by the engine control section 61 for starting the engine 2 is not limited to the control described above.

The battery control section 62 is a processing section for controlling a supply of the electric power from the battery 4. The battery control section 62 can execute a control of applying the electricity to each electronic device in the electronic device group by supplying the electric power of the battery 4 to each electronic device in the electronic device group.

The control executed by the battery control section 62 for supplying the electric power of the battery 4 to the electronic device may include, for example, the following control. Specifically, the hydraulic excavator 1 further includes, for example, a second power supply shift part. The second power supply shift part serves as an electric circuit component configured to be shiftable between a permission state of permitting the supply of the electric power from the battery 4 to each electronic device in the electronic device group and a suspension state of suspending the supply of the electric power from the battery 4 to the electronic device group. The battery control section 62 can supply the electric power of the battery 4 to each electronic device in the electronic device group to start an electric application to each electronic device in the electronic device group by outputting an instruction signal for shifting the second power supply shift part to the permission state for a supply of the electric power from the battery 4 to each electronic device in the electronic device group. On the other hand, the battery control section 62 can suspend the electric application to the electronic device group by outputting an instruction signal for shifting the second power supply shift part to the suspension state.

The unlocking detection section 63 is a detection section for detecting an unlocking manipulation to unlock the door 12 of the cab 11. The unlocking detection section 63 is an example of an electric application instruction detection section. The door lock 13 is configured to be shiftable between a locked state and an unlocked state. The unlocking manipulation is a manipulation to shift the door lock 13 from the locked state to the unlocked state.

The unlocking detection section 63 is composed of a sensor which can detect that an unlocking manipulation (an unlocking manipulation for the door lock 13) to unlock the door 12 is made. Specifically, the unlocking detection section 63 may be composed of a sensor which can detect a rotation angle of a key cylinder in the door lock 13. The unlocking detection section 63 may be composed of a sensor which can detect that an electronic key for shifting the door lock 13 between the locked state and the unlocked state is close to or in contact with the door lock 13. In this case, the unlocking detection section 63 includes a receiver which can receive a radio wave emitted from the electronic key. Alternatively, the unlocking detection section 63 may be composed of a detection device including: a receiver which can receive a radio wave emitted from the electronic key; and a contact sensor for detecting a contact with the operator. In this case, the receiver may be configured to detect a presence of the electronic key (e.g., an electronic key carried by the operator) in the vicinity of the hydraulic excavator 1. The contact sensor may be configured to detect, for example, a contact between the operator and the door 12 of the cab 11. However, the unlocking detection section 63 is not limited to these specific examples.

The unlocking manipulation is an example of an electric application instruction. The electric application instruction is set in advance to cause the battery control section 62 to execute a control of conducting the electric application to the electronic device by supplying the electric power of the battery 4 to the electronic device. In the first embodiment, the electric application instruction is set to the unlocking manipulation, but is not limited thereto. The electric application instruction may include a manipulation made by a worker, e.g., an operator, for the hydraulic excavator 1 or a device relevant thereto, or may include a behavior taken by the worker in the work site.

When detecting an unlocking manipulation (an unlocking manipulation for the door lock 13) to unlock the door 12, the unlocking detection section 63 inputs a signal indicating that the unlocking manipulation is made to the main control part of the controller 6.

The door opening and closing detection section 64 is a detection section for detecting an opening and closing manipulation for the door 12 of the cab 11. The door opening and closing detection section 64 is an example of a door opening detection section. Specifically, the door opening and closing detection section 64 detects an opening manipulation to open the door 12 (opening of the door 12), and detects a closing manipulation to close the door 12 (closing of the door 12).

The door opening and closing detection section 64 is composed of a sensor which can detect each of the opening manipulation and the closing manipulation. Specifically, the door opening and closing detection section 64 may be composed of, for example, a sensor which is provided on at least one of the door 12 and a door frame, and can detect that an end of the door 12 is close to or in contact with the door frame in response to a closing manipulation and detect that the end of the door 12 is away from the door frame in response to an opening manipulation. However, the door opening and closing detection section 64 is not limited thereto.

When detecting that the opening manipulation is made, the door opening and closing detection section 64 inputs a signal indicating that the opening manipulation is made to the main control part of the controller 6.

The timer section 65 is configured to measure a time from the start of the electric application to the electronic device group by the battery control section 62 as an elapsed time.

The locking control section 66 is a processing section for controlling an operation of the door lock 13 in the cab 11. The locking control section 66 executes a control of locking the door 12 by shifting the door lock 13 from the unlocked state to the locked state and a control of unlocking the door 12 by shifting the door lock 13 from the locked state to the unlocked state. In other words, the locking control section 66 can automatically lock or unlock the door 12 of the cab 11.

The notification control section 67 is a processing section for executing a control of notifying that the electric application to the electronic device group by the battery 4 is to be suspended. In the first embodiment, the notification control section 67 outputs a signal corresponding to a message to the manipulation panel 5 such that the message is displayed on the manipulation panel 5, the message being for informing that the electric application to the electronic device group by the battery 4 is to be suspended.

Subsequently, a process (electric application control process) executed by the controller 6 according to the first embodiment will be described with reference to the flowchart in FIG. 2.

In FIG. 2, it is determined in Steps S13 and S14 whether a first power consumption suppression condition set in advance is satisfied. The battery control section 62 executes a power consumption suppression control of suppressing a power consumption of the battery 4 (Step S16) when the first power consumption suppression condition is satisfied after an electric application to an electronic device is started and before the engine 2 is started (YES in Step S13). Details will be described hereinafter.

As shown in FIG. 2, in Step S11, the main control part of the controller 6 determines whether an unlocking manipulation (an unlocking manipulation for the door lock 13) to unlock the door 12 of the cab 11 is detected by the unlocking detection section 63. For instance, the unlocking detection section 63 may be configured to detect, as an unlocking manipulation, a contact between an operator carrying the electronic key and the contact sensor provided at the door 12. In the first embodiment shown in FIG. 2, the electric application instruction represents an unlocking manipulation detected by the unlocking detection section 63.

When the unlocking detection section 63 detects the unlocking manipulation, i.e., an electric application instruction (YES in Step S11), the unlocking detection section 63 inputs a signal indicating the detection of the unlocking manipulation to the main control part of the controller 6. Next, in Step S12, the battery control section 62 of the controller 6 executes a control of starting an electric application to each electronic device in the electronic device group by supplying an electric power of the battery 4 to each electronic device in the electronic device group.

In Step S 13, the main control part of the controller 6 determines whether an elapsed time (a time from the start of the electric application to the electronic device group) measured by the timer section 65 exceeds a reference time T1. The reference time T1 is an example of a first reference time. The reference time T1 is a time threshold set in advance, and may be set to an arbitrary value by the worker. The reference time T1 may be set in consideration of data, e.g., data concerning an average time required for the operator to make a start manipulation to start the engine 2 after the electric application instruction is given, and data concerning a time required to complete an operation confirmation for each electronic device in the electronic device group after the electric application instruction is given. However, the way of setting the reference time T1 is not limited thereto.

When it is determined that the elapsed time from the start of the electric application does not exceed the reference time T1 (NO in Step S13), the main control part of the controller 6 proceeds to Step S14. Conversely, when it is determined that the elapsed time exceeds the reference time T1 (YES in Step S13), the main control part of the controller 6 proceeds to Step S16.

In Step S14, the main control part of the controller 6 determines whether the push start key 3 has received a start manipulation to start the engine 2. When receiving the start manipulation by the operator, the push start key 3 inputs a signal indicating that the start manipulation is received to the main control part of the controller 6.

When it is determined that the start manipulation for the engine 2 is received (YES in Step S14), the main control part of the controller 6 proceeds to Step S15. Conversely, when it is determined that the start manipulation for the engine 2 is not received (NO in Step S14), the main control part of the controller 6 proceeds to Step S13.

In Step S15, the engine control section 61 of the controller 6 executes a control of starting the engine 2.

Meanwhile, when it is determined that the elapsed time exceeds the reference time T1 (YES in Step S13), the battery control section 62 of the controller 6 executes, in Step 16, a control of suspending the electric application to the electronic device group by suspending the supply of the electric power from the battery 4.

When the electric application to the electronic device group is suspended, the locking control section 66 of the controller 6 controls, in Step 17, the operation of the door lock 13 to lock the door 12. This allows the door 12 to be automatically locked with no manipulation by the operator to shift the door lock 13 to a locked state.

In the first embodiment described above, when the unlocking manipulation (electric application instruction) is detected (YES in Step S11 in FIG. 2), the electric power of the battery 4 is supplied to the electronic device group, thereby starting the electric application to the electronic device group (Step S12). Further, in the case where the start manipulation is received (YES in Step S14) before the elapsed time from the start of the electric application exceeds the reference time T1 (NO in Step S13), the engine 2 is started (Step S15). Therefore, the electric application starts before the push start key 3 receives the start manipulation for the engine 2 (the hydraulic excavator 1 is put in a turn-on state). This enables the operator to utilize the time until the operator sits on the operator seat in the cab 11 as a time for the electric application to the electronic device group. The configuration consequently makes it possible to shorten a waiting time since the operator sits on the operator seat until the engine 2 is ready to be started in the hydraulic excavator 1, resulting in relieving the operator's stress.

Further, in the first embodiment, when the elapsed time from the start of the electric application exceeds the reference time T1 (YES in Step S13), the electric application by the battery 4 to the electronic device group is suspended (Step S16). Specifically, the electric application to the electronic device group is suspended with reference to the elapsed time and the reference time T1 in a case where the electric application to the electronic device may continue for a long time period with no start manipulation for the engine 2 from the operator, e.g., in a case where the operator has no will to start the engine 2, and in a case where the operator performs another operation or manipulation before starting the engine 2. The suspension makes it possible to suppress the power consumption of the battery 4 and suppress a reduction in a residual amount in the battery.

Besides, a specific manipulation, e.g., an unlocking manipulation to unlock the door 12, made by the worker such as an operator is set as the electric application instruction in the first embodiment. Therefore, the electric application to the electronic device group can be started at a relatively high possibility of starting the engine 2.

Additionally, in the first embodiment, after the elapsed time from the start of the electric application exceeds the reference time T1 (YES in Step S13) and the electric application to the electronic device group by the battery 4 is suspended (Step S16), a control of locking the door 12 by the door lock 13 in the cab 11 is executed, and the door 12 is automatically locked (Step S17). This can prevent a theft.

### Second embodiment

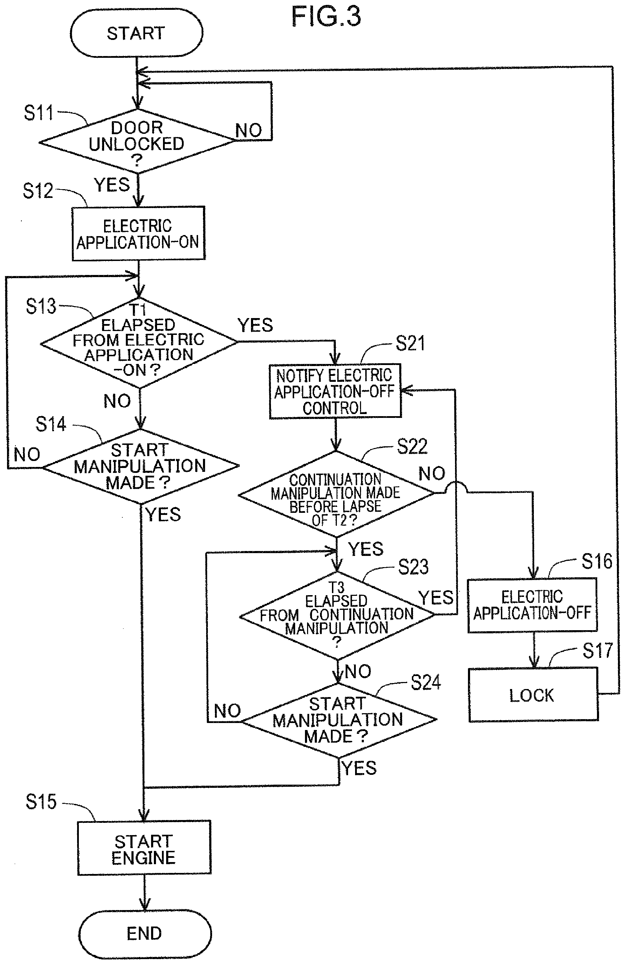

A second embodiment will be described with reference to the flowchart in FIG. 3. The second embodiment is a modification of the first embodiment described above. A process executed by a controller 6 according to the second embodiment differs from the process executed by the controller 6 according to the first embodiment in additional Steps S21 to S24 shown in FIG. 3. Hereinafter, features of a configuration according to the second embodiment that are different from those of the configuration according to the first embodiment will be mainly described.

In FIG. 3, it is determined in Steps S13 and S14 whether the first power consumption suppression condition set in advance is satisfied. It is determined in Step S22 whether a second power consumption suppression condition set in advance is satisfied. It is determined in Steps 23 and S24 whether a third power consumption suppression condition set in advance is satisfied. A notification control section 67 executes a control of notifying that an electric application to an electronic device is to be suspended (Step S21) when the first power consumption suppression condition is satisfied (YES in Step S13). A battery control section 62 executes a control of suspending the electric application to the electronic device (Step S16) when the second power consumption suppression condition is satisfied (NO in Step S22). The notification control section 67 executes a control of re-notifying that the electric application to the electronic device is to be suspended (Step S21) when the third power consumption suppression condition is satisfied (YES in Step S23). Details will be described hereinafter.

As shown in FIG. 3, when an elapsed time from a start of the electric application exceeds a reference time T1 (YES in Step S13), a main control part of the controller 6 according to the second embodiment executes a notification (Steps S21 to S24) of preliminarily notifying an operator of a suspension of the electric application to an electronic device group, that is, notifying the operator that the electric application to the electronic device group is to be suspended, instead of immediately suspending the electric application to the electronic device group as in the first embodiment.

Specifically, the notification control section 67 of the controller 6 outputs, in Step S21, a signal corresponding to a message to a manipulation panel 5 such that the message is displayed on the manipulation panel 5, the message being for informing that the electric application by a battery 4 to the electronic device group is to be suspended (e.g., "The electric application will be suspended").

The notification control section 67 according to the second embodiment is configured to notify the suspension of the electric application by way of the message displayed on the manipulation panel 5, but the notification way is not limited thereto. For instance, the notification control section 67 may be configured to notify the suspension of the electric application by way of an alarm sound or a preliminarily recorded voice data. Alternatively, the notification control section 67 may be configured to notify the suspension of the electric application by way of an emission of light (intermittent light) from an illumination device, e.g., lighting equipment. Further alternatively, the notification control section 67 in such a machine as to include a cab having an illumination device to emit light concurrently with a start of an electric application may be configured to notify a suspension of the electric application by way of brightness of the light, e.g., "darkening". The adoption of each notification way succeeds in notifying the operator of the suspension of the electric application even when the operator looks away from the manipulation panel 5.

In Step S22, the main control part of the controller 6 determines whether a continuation manipulation to continue the electric application is made in a period from a notification by the notification control section 67 to a lapse of a reference time T2. The continuation manipulation is set in advance to reflect a will of the operator to maintain an electric application state in which the electricity is kept applied to the electronic device group, and is made when the operator wishes to maintain the state. Specifically, the continuation manipulation may be a reply manipulation to reply to a query message displayed together with the message concerning the suspension of the electric application described above. Examples of the query message can include a phrase "Maintain the electric application state?". The reply manipulation to the query message may include a manipulation by the operator to select one of the options (e.g., "Yes" / "No") displayed on the manipulation panel 5. Further, the continuation manipulation may include a manipulation for a manipulation lever or a switch provided in the cab. However, the continuation manipulation is not limited to these specific examples. The reference time T2 is an example of a second reference time. The reference time T2 is a time threshold set in advance, and may be set to an arbitrary value by a worker.

When it is determined, in Step S22, that the continuation manipulation is made before the reference time T2 elapses (YES in Step S22), the main control part of the controller 6 proceeds to Step S23. Conversely, when the reference time T2 elapses without making of the continuation manipulation (NO in Step S22), the main control part of the controller 6 proceeds to Step S16.

In Steps S23 and S24, the main control part of the controller 6 determines whether a push start key 3 has received a start manipulation for an engine 2 before a lapse of a reference time T3 from the continuation manipulation. The reference time T3 is an example of a third reference time. The reference time T3 is a time threshold set in advance, and may be set to an arbitrary value by the worker.

When it is determined that the start manipulation is received before the reference time T3 elapses (NO in Step S23 and YES in Step S24), the main control part of the controller 6 proceeds to Step S15. Conversely, when the reference time T3 elapses without receiving of the start manipulation (YES in Step S23), the main control part of the controller 6 proceeds to Step S21. Specifically, the notification control section 67 executes a control of re-notifying the message for informing that the electric application by the battery 4 to the electronic device group is to be suspended.

The description of the remaining steps of the process in the second embodiment that are the same as those of the process in the first embodiment will be omitted.

In the second embodiment described above, even when the elapsed time from the start of the electric application exceeds the reference time T1 (YES in Step S13), a notification is preliminarily provided to inform that the electric application is to be suspended (Steps S21 to S24) instead of an immediate suspension of the electric application to the electronic device group. When the continuation manipulation to continue the electric application is made before the reference time T2 elapses, the electric application can be maintained without making of any start manipulation for the engine 2. This configuration enables the worker, e.g., the operator, a work manager, and a worker engaged in maintenance, who wishes to maintain the electric application to the electronic device group for performing various kinds of works including extraction of log data indicating an operation status of a machine and a maintenance performance without starting the engine 2, to maintain the electric application and to perform these works without interruption.

Further, in the second embodiment, the engine 2 can be started, even when the elapsed time from the start of the electric application exceeds the reference time T1 (YES in Step S13), by making the continuation manipulation before the reference time T2 elapses and making a pushing manipulation (start manipulation) for the push start key 3 before a lapse of the reference time T3 from the continuation manipulation.

### Third Embodiment

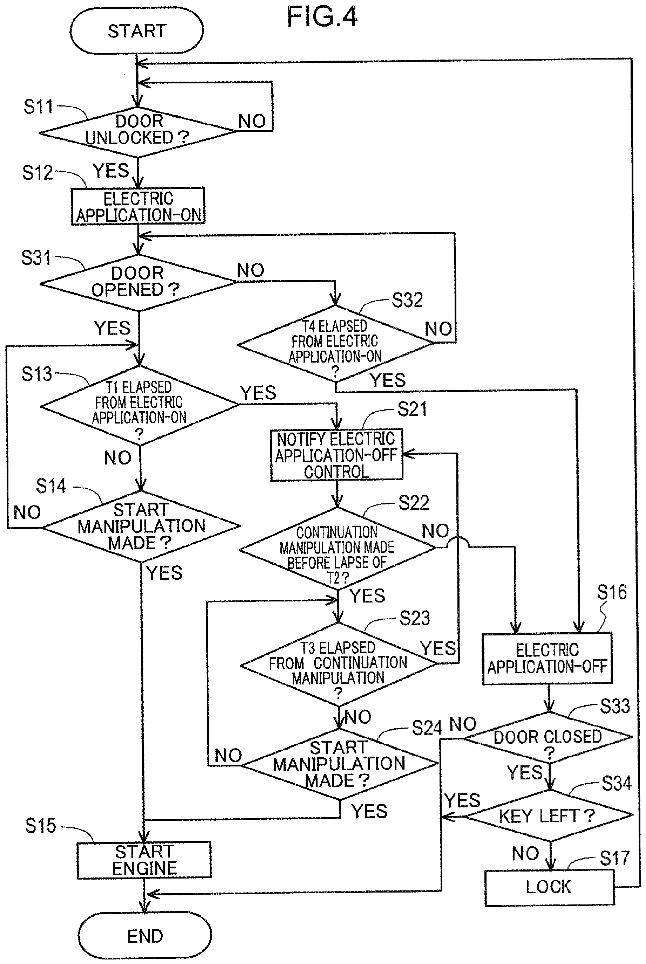

A third embodiment will be described with reference to the flowchart in FIG. 4. The third embodiment is a modification of the second embodiment described above. A process executed by a controller 6 according to the third embodiment differs from the process executed by the controller 6 according to the second embodiment in additional Steps S31 to S34 shown in FIG. 4. Hereinafter, features of a configuration according to the third embodiment that are different from those of the configuration according to the second embodiment will be mainly described.

In FIG. 4, it is determined in Steps S31 and S32 whether a fourth power consumption suppression condition set in advance is satisfied. When the fourth power consumption suppression condition is satisfied (YES in Step S32), a battery control section 62 executes a control of suspending an electric application to an electronic device (Step S16). Details will be described hereinafter.

As shown in FIG. 4, a main control part of a controller 6 according to the third embodiment executes a determination (Steps S31, S32) of determining whether to continue the electric application depending on whether a door 12 of a cab 11 is opened after a start of the electric application (Step S12). Further, the main control part of the controller 6 according to the third embodiment executes a pre-locking confirmation (Steps S33, S34) after a suspension of the electric application to an electronic device group instead of immediately locking the door.

Specifically, in Step S31, the main control part of the controller 6 determines whether an opening manipulation to open the door 12 of the cab is detected by a door opening and closing detection section 64. When it is determined that the opening manipulation is detected (YES in Step S31), the main control part of the controller 6 proceeds to Step S13. Conversely, when it is determined that the opening manipulation is not detected, i.e., the door is closed (NO in Step S31), the main control part of the controller 6 proceeds to Step S32.

In Step S32, the main control part of the controller 6 determines whether an elapsed time from the start of the electric application to the electronic device group exceeds a reference time T4. The reference time T4 is an example of a fourth reference time. The reference time T4 is a time threshold set in advance, and may be set to an arbitrary value by the worker. The reference time T4 according to the third embodiment is set to a value smaller than the reference time T1. This achieves a prompt execution of a control of suspending the electric application in a case where no opening manipulation is made after the start of the electric application to the electronic device group to thereby effectively suppress a power consumption of a battery 4. However, the reference time T4 may have the same value as the reference time T1, or a value greater than the reference time T1.

When it is determined that the elapsed time from the start of the electric application does not exceed the reference time T4 (NO in Step S32), the main control part of the controller 6 proceeds to Step S31. Conversely, when it is determined that the elapsed time from the start of the electric application exceeds the reference time T4 (YES in Step S32), the main control part of the controller 6 proceeds to Step S16. Specifically, the battery control section 62 executes a control of suspending the electric application to the electronic device group by suspending a supply of the electric power from the battery 4.

In Step S33, the main control part of the controller 6 determines whether the door opening and closing detection section 64 detects that the door 12 of the cab 11 is closed. When it is determined that the door 12 is closed (YES in Step S33), the main control part of the controller 6 proceeds to Step S34. Conversely, when it is determined that the door is not closed (NO in Step S33), the main control part of the controller 6 finishes the process in a state where the electric application to the electronic device group is suspended and the door is opened.

In Step S34, the main control part of the controller 6 determines whether a key is left in the cab 11. When it is determined that the key is not left therein (NO in Step S34), the main control part of the controller 6 proceeds to Step S17. Specifically, a locking control section 66 controls an operation of a door lock 13 to lock the door 12. Conversely, when it is determined that the key is left (YES in Step S34), the main control part of the controller 6 finishes the process in a state where the door 12 is unlocked.

A determination as to whether the key is left in the cab 11 may be made in the following manner. When the key is an electronic key, the controller 6 may further include a receiver which can receive a radio wave emitted from the electronic key. The main control part of the controller 6 may be configured to determine that the key is left in the cab 11 when the receiver receives the radio wave indicating that the key is left in the cab 11.

The description of the remaining steps of the process in the third embodiment that are the same as those of the process in the second embodiment will be omitted.

In the third embodiment described above, the electric application to the electronic device group is suspended (Step S16) unless the door is opened in a period from the start of the electric application to the lapse of the reference time T4 (YES in Step S32). In other words, when the door is unlikely to be opened after the start of the electric application, the operator is deemed to have no will to start the engine 2. Accordingly, the electric application to the electronic device group is forcibly suspended. This results in attaining a rapid reduction in the power consumption of the battery 4.

Further, in the third embodiment, the door is automatically locked (Step S17) under the condition that the key is not left in the cab (NO in Step S34). Therefore, the configuration prevents the door from being locked while the key is left in the cab, i.e., prevents a locked-out state.

### Fourth embodiment

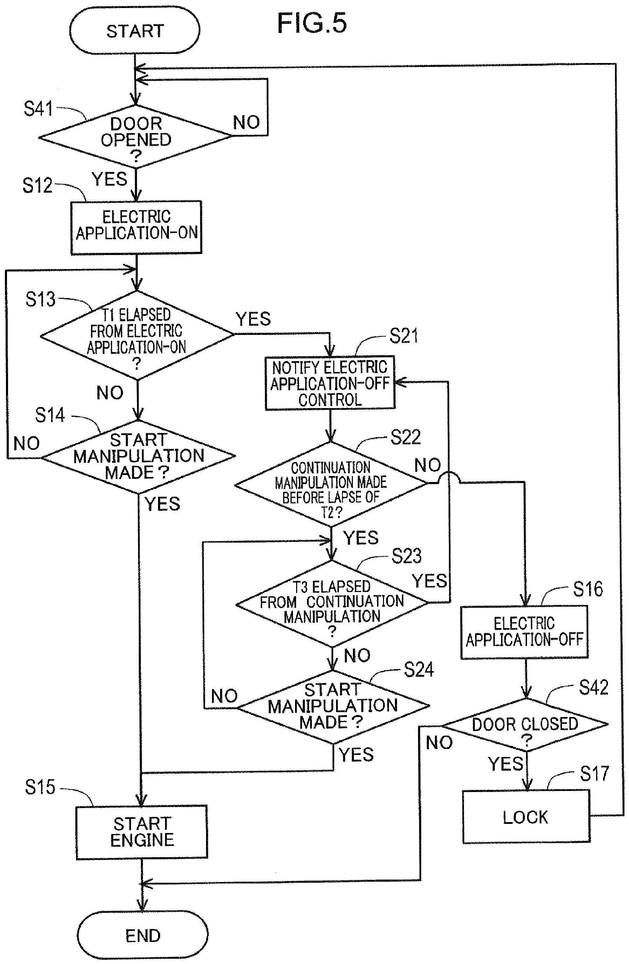

A fourth embodiment will be described with reference to the flowchart in FIG. 5. The fourth embodiment is a modification of the second embodiment described above. A process executed by a controller 6 according to the fourth embodiment differs from the process executed by the controller 6 according to the second embodiment in the difference seen in Step S41 shown in FIG. 5 from Step S11 shown in FIG. 3, and an additional Step S42 shown in FIG. 5. Hereinafter, features of a configuration according to the fourth embodiment that are different from those of the configuration according to the second embodiment will be mainly described.

In the fourth embodiment shown in FIG. 5, the electric application instruction does not represent an unlocking manipulation to unlock a door 12, but represents an opening manipulation to open the door 12. The opening manipulation is detected by a door opening and closing detection section 64.

Specifically, in Step S41 in FIG. 5, a main control part of the controller 6 determines whether the opening manipulation for the door 12 is detected by the door opening and closing detection section 64. When the opening manipulation (electric application instruction) is detected (YES in Step S41), the main control part of the controller 6 proceeds to Step 12, thereby starting an electric application to each electronic device in an electronic device group.

Further, in the fourth embodiment, after the electric application is suspended (Step S16), the main control part of the controller 6 determines whether the door opening and closing detection section 64 detects that the door 12 of a cab 11 is closed (Step S42). When it is determined that the door 12 is not closed, i.e., is open (NO in Step S42), the main control part of the controller 6 finishes the process without locking the door 12. Conversely, when it is determined that the door 12 is closed (YES in Step S42), the main control part of the controller 6 proceeds to Step S17. Specifically, a locking control section 66 controls an operation of a door lock 13 to lock the door 12. This control allows the door 12 to be automatically locked without a manipulation by an operator to shift the door lock 13 to a locked state. The door 12 may be locked immediately after the determination that the door 12 is closed, or may be locked after a lapse of a predetermined time from the determination that the door 12 is closed.

Besides, a specific manipulation, e.g., the opening manipulation for the door 12, made by a worker such as the operator is set as an electric application instruction in the fourth embodiment. Therefore, the electric application to the electronic device group can be started at a relatively high possibility of starting the engine 2.

The description of the remaining steps of the process in the fourth embodiment that are the same as those of the process in the second embodiment will be omitted. In the fourth embodiment, the door opening and closing detection section 64 is an example of an electric application instruction detection section.

### Fifth Embodiment

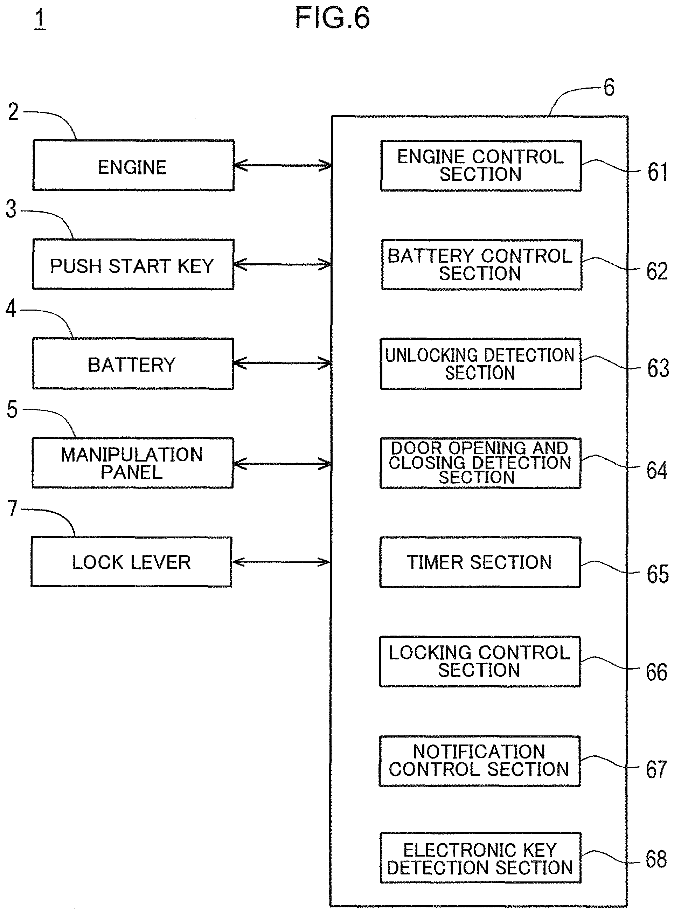

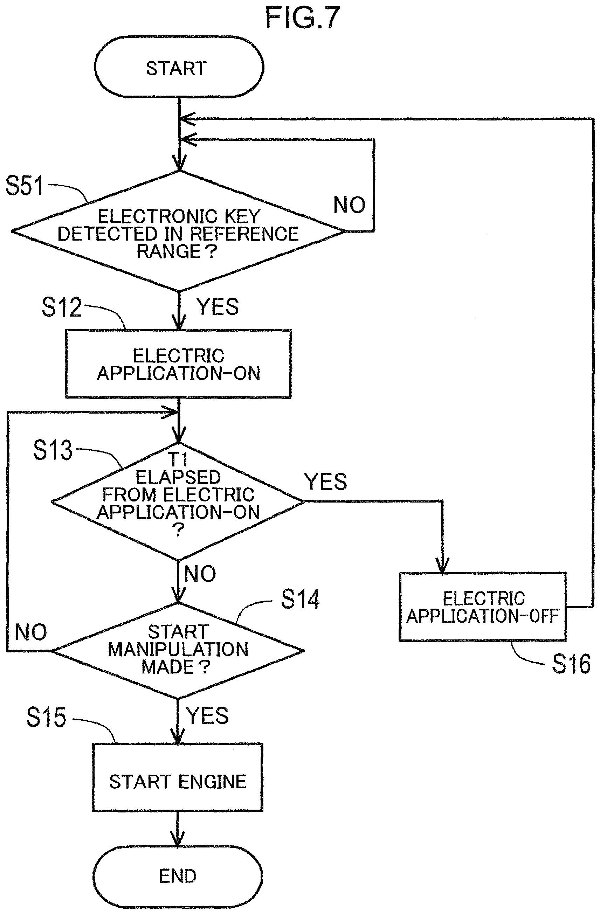

A fifth embodiment will be described with reference to the block diagram in FIG. 6 and the flowchart in FIG. 7. The fifth embodiment is a modification of the first embodiment described above. Hereinafter, features of a configuration according to the fifth embodiment that are different from those of the configuration according to the first embodiment will be mainly described.

As shown in FIG. 6, in the fifth embodiment, a controller 6 further includes an electronic key detection section 68, in addition to the control sections 61, 62, 66, 67, the detection sections 63, 64, and the timer section 65 which are described above.

The electronic key detection section 68 is a detection section for detecting a presence of an electronic key in a reference range set in advance. The reference range is a range where the electronic key detection section 68 can detect an electronic key. For instance, the range may be set at equal intervals from a reference point, or to a specific division.

Specifically, the electronic key detection section 68 includes a receiver which can receive a radio wave emitted from the electronic key. In this case, the reference range may include the whole area of a range where the receiver can receive the radio wave emitted from the electronic key, or may include a partial area of the range where the receiver can receive the radio wave emitted from the electronic key. The electronic key is, for example, carried by an operator. For instance, the electronic key detection section 68 may be arranged in a portion of a cab 11 of a hydraulic excavator 1. However, the electronic key detection section 68 may be arranged in any portion of the hydraulic excavator 1 other than the portion in the cab 11.

When detecting the presence of the electronic key in the reference range, the electronic key detection section 68 inputs a signal indicating the presence to a main control part of the controller 6.

In the fifth embodiment shown in FIG. 7, the electric application instruction does not represent an unlocking manipulation to unlock a door 12, but represents the presence of the electronic key in the reference range. The presence is detected by the electronic key detection section 68.

Specifically, as shown in FIG. 7, the main control part of the controller 6 determines, in Step S51, whether the electronic key is detected in the reference range by the electronic key detection section 68. When the electronic key is detected in the reference range (YES in Step S51), it is determined that the electric application instruction as described above is received. The main control part of the controller 6 proceeds to Step S12, thereby starting an electric application to each electronic device in an electronic device group.

The description of the remaining steps of the process in the fifth embodiment that are the same as those of the process in the first embodiment will be omitted. In the fifth embodiment, the electronic key detection section 68 is an example of an electric application instruction detection section.

### Sixth Embodiment

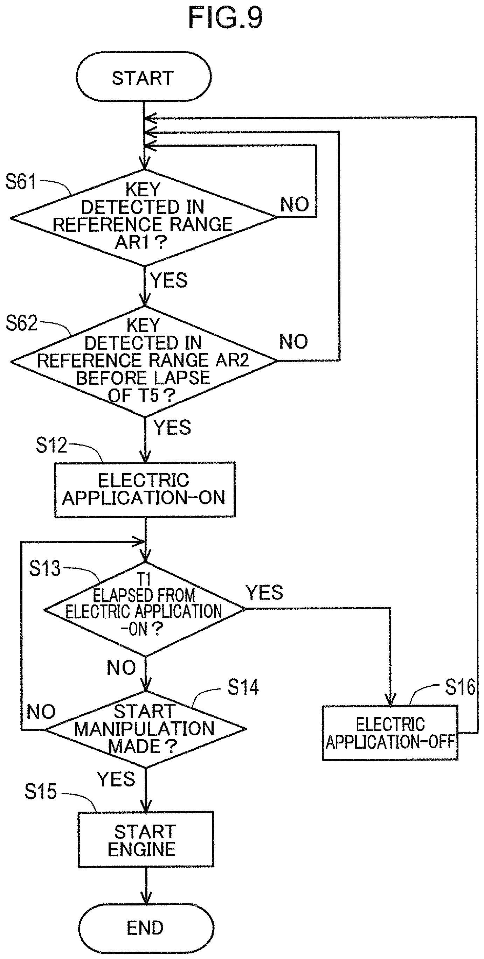

A sixth embodiment will be described with reference to the schematic view in FIG. 8 and the flowchart in FIG. 9. The sixth embodiment is a modification of the fifth embodiment described above. Hereinafter, features of a configuration according to the sixth embodiment that are different from those of the configuration according to the fifth embodiment will be mainly described.

In the sixth embodiment, a controller 6 includes an electronic key detection section 68 shown in FIG. 6. As shown in FIG. 8, the electronic key detection section 68 is configured to detect a presence of an electronic key 14 in a reference range AR1, and a presence of the electronic key 14 in a reference range AR2 closer to a cab 11 of a hydraulic excavator 1 than the reference range AR1. The reference range AR1 is a range set in advance, and represents an example of a first reference range. The reference range AR2 is a range set in advance, and represents an example of a second reference range.

Specifically, the electronic key detection section 68 includes a first receiver and a second receiver each of which can receive a radio wave emitted from the electronic key 14. A range where the first receiver can receive the radio wave emitted from the electronic key 14 is larger than a range where the second receiver can receive the radio wave emitted from the electronic key 14. In this case, the reference range AR1 is a range obtained by subtracting the range for the receipt by the second receiver from the range for the receipt by the first receiver. The reference range AR2 may be the range for the receipt by the second receiver. The electronic key detection section 68 may be configured to detect each of the reference range AR1 and the reference range AR2 by a single receiver. The electronic key 14 is, for example, carried by an operator. For instance, the electronic key detection section 68 may be arranged in a portion of the cab 11. However, the electronic key detection section 68 may be arranged in any portion of the hydraulic excavator other than the portion in the cab 11.

In the sixth embodiment shown in FIG. 9, an electric application instruction represents the presence of the electronic key 14 in the reference range AR2 closer to the cab 11 in a period from a detection of the electronic key 14 in the reference range AR1 to a lapse of a reference time T5. The presence is detected by the electronic key detection section 68.

Specifically, as shown in FIG. 9, a main control part of the controller 6 determines, in Step S61, whether the electronic key 14 is detected in the reference range AR1 by the electronic key detection section 68. When the electronic key 14 is detected in the reference range AR1 (YES in Step S61), the main control part of the controller 6 proceeds to Step S62.

In Step S62, the main control part of the controller 6 determines whether the electronic key 14 is detected in the reference range AR2 closer to the cab 11 before a lapse of the reference time T5 from the detection of the electronic key 14 in the reference range AR1. The reference time T5 is an example of a fifth reference time. The reference time T5 may be set to an arbitrary value by a worker. The reference time T5 may be set, for example, in consideration of data concerning an average time required for the operator to enter the reference range AR2 after the operator enters the reference range AR1. However, the way of setting the reference time T5 is not limited thereto.

When the electronic key 14 is detected in the reference range AR2 before the reference time T5 elapses (YES in Step S62), it is determined that an electric application instruction is received. The main control part of the controller 6 proceeds to Step S12, thereby starting the electric application to each electronic device in an electronic device group.

In the sixth embodiment described above, the electric application is started in a case where the electronic key 14 is detected in the reference range AR2 closer to the cab 11 before the lapse of the reference time T5 from the detection of the electronic key 14 in the reference range AR1. In the sixth embodiment, the electric application can be started at a relatively high possibility of starting an engine 2, for example, when the worker such as the operator carrying the electronic key 14 gradually approaches the cab 11 of a hydraulic excavator 1. Accordingly, wasteful electric application to the electronic device group is more effectively suppressible, and a power consumption of a battery 4 is consequently more effectively suppressible in the sixth embodiment than in the fifth embodiment where the electric application is started immediately after the detection of the electronic key 14 in the reference range.

### Seventh Embodiment

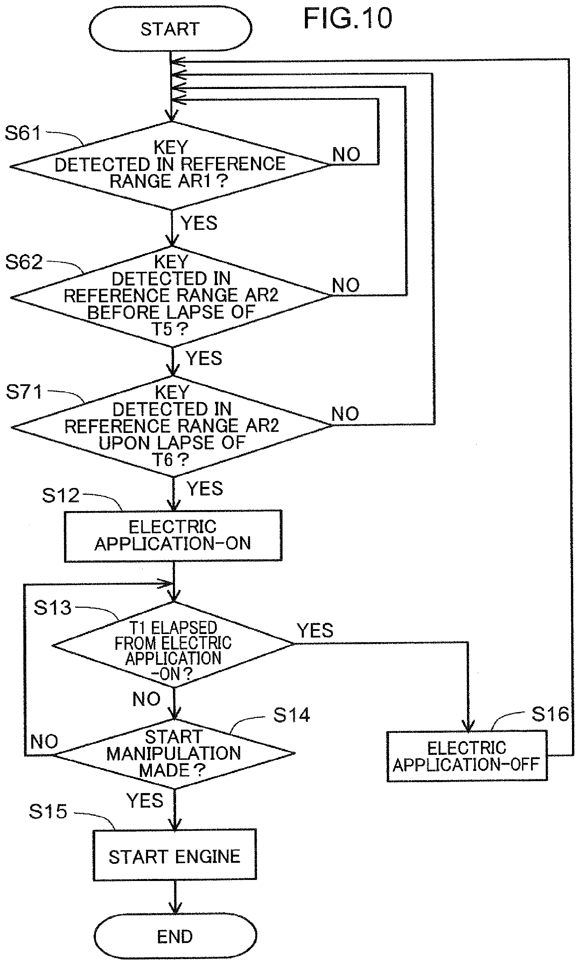

Next, a seventh embodiment will be described with reference to the flowchart in FIG. 10. The seventh embodiment is a modification of the sixth embodiment described above. Hereinafter, features of a configuration according to the seventh embodiment that are different from those of the configuration according to the sixth embodiment will be mainly described.

As shown in FIG. 10, a process executed by a controller 6 according to the seventh embodiment differs from the process executed by the controller 6 according to the sixth embodiment shown in FIG. 9 in additional Step S71.

In Step S71, a main control part of the controller 6 determines whether an electronic key 14 is re-detected in a second reference range AR2 by an electronic key detection section 68 upon a lapse of a reference time T6 from the detection of the electronic key 14 in the second reference range AR2.

When the electronic key 14 is re-detected in the second reference range AR2 upon the lapse of the reference time T6 (YES in Step S71), it is determined that an electric application instruction described above is received. The main control part of the controller 6 proceeds to Step S12, thereby starting an electric application to each electronic device in an electronic device group.

Conversely, when the electronic key 14 is not re-detected in the second reference range AR2 upon the lapse of the reference time T6 (NO in Step S71), a worker such as an operator carrying the electronic key 14 is determined to have moved away from a hydraulic excavator 1 (i.e., to have a low possibility of starting an engine 2). Accordingly, the main control part of the controller 6 proceeds to Step S61.

In the seventh embodiment described above, the electric application to the electronic device group is not started in a situation where the worker such as the operator carrying the electronic key 14 moves away from the hydraulic excavator 1 after approaching the hydraulic excavator 1 (a situation where the worker merely passes near the hydraulic excavator 1). Consequently, a power consumption of a battery 4 can be suppressed.

### Modifications

The present invention is not limited to the above-described embodiments and may be variously modified or improved within the scope of the claims.

### Modification 1

For instance, each of the embodiments described above shows an example where the engine 2 starts immediately after the push start key 3 receives a start manipulation for the engine 2. However, the present invention is not limited to this aspect. As shown in FIGS. 1 and 6, a hydraulic excavator 1 may further include a hydraulic lock lever 7 (boarding and alighting blocking lever) shiftable between a locked state and an unlocked state. In this case, a main control part of a controller 6 may be configured to determine whether the hydraulic lock lever 7 is in a locked state, and an engine control section 61 may be configured to execute a control of starting the engine 2 under the condition that the hydraulic lock lever 7 is determined to be in the locked state, upon receipt of the start manipulation for the engine 2, to prevent attachments and other components from operating against an operator's will.

Further, in the modification, the main control part of the controller 6 may be configured to issue a warning that the engine 2 cannot be started when the hydraulic lock lever 7 is determined not to be in the locked state. Supposed specific warning ways include displaying a message on a manipulation panel 5, turning an alarm lamp on, and providing a voice notification. The hydraulic lock lever 7 is an example of a lock mechanism. The lock mechanism may not utilize hydraulic pressure. The lock mechanism may not include a lever.

### Modification 2

Each of the embodiments described above shows an example where an electric application to an electronic device group is automatically started in response to an electric application instruction, and the engine 2 is manually started with a manipulation made by an operator for the push start key 3. However, the present invention is not limited to this aspect. A sequential flow of an electric application to an electronic device group to a start of the engine 2 may be automatically executed by a main control part of a controller 6.

A hydraulic excavator 1 according to Modification 2 includes, for example, the following configuration. Specifically, the hydraulic excavator 1 may include: an engine 2; a battery 4 for supplying an electric power; and a controller 6. The controller 6 may include: an engine control section 61 for controlling the engine 2; a battery control section 62 for controlling the supply of the electric power from the battery 4; and an electric application instruction detection section for detecting an electric application instruction of starting an electric application to an electronic device by supplying the electric power from the battery 4 to the electronic device, the electronic device requiring operation confirmation prior to the start of the engine 2. The battery control section 62 may be configured to execute a control of starting the electric application to the electronic device by supplying the electric power from the battery 4 to the electronic device in response to a detection of the electric application instruction by the electric application instruction detection section. The engine control section 61 may be configured to execute a control of starting the engine 2 in response to a completion of the operation confirmation after the electric application to the electronic device. In Modification 2, at least one of the start manipulation receipt part and the timer section may be omitted.

In Modification 2, the engine 2 is automatically started by the engine control section 61 without making of a start manipulation by the operator under the condition that the electric application to the electronic device group is started and the operation confirmation for the electronic device group is completed. In this case, it is preferable to additionally include a locked state of the hydraulic lock lever 7 in the condition for automatically starting the engine 2 in consideration of the safety.

In Modification 2, the engine control section 61 executes the control of starting the engine 2 in response to the completion of the operation confirmation after the electric application to the electronic device, and hence the engine is started without making of the start manipulation by the operator. This control can suppress a wasteful power consumption of the battery 4 after the start of the electric application to the electronic device from the battery 4, and consequently suppress a reduction in the residual amount in the battery 4. In Modification 2, the control of starting the engine 2 is executed in response to the completion of the operation confirmation. Therefore, the engine 2 is relatively promptly started, resulting in shortening a waiting time associated with a warming-up operation after the start of the engine 2.

In Modification 2, the electric application instruction is preferably an instruction based on a behavior taken by the operator relevant to a construction machine outside a cab 11 of the construction machine before the start of the engine 2. In this case, the waiting time since the operator sits on an operator seat until the engine 2 is ready to be started (the waiting time associated with the operation confirmation for the electronic device group) can be shortened.

### Modification 3

In each of the embodiments described above, for instance, the main control part of the controller 6 may be configured to execute a control of emitting light from an illumination device provided in the cab 11 concurrently with a control of starting an electric application to secure the safety in boarding and alighting the cab 11. A timing for emitting the light from the illumination device may be concurrent with a start of the electric application, or may be after a lapse of a predetermined time from the start of the electric application.

### Modification 4

In the fourth embodiment described above, when an opening manipulation is detected by the door opening and closing detection section 64 (YES in Step S41), it is determined that the electric application instruction described above is received, and a control of starting an electric application is executed as shown in FIG. 5. However, the present invention is not limited to this aspect. For example, when a door 12 of a cab 11 is open, an opening manipulation for the door 12 is undetectable as the electric application instruction. Therefore, it may be configured that a detection of an electronic key in a reference range by an electronic key detection section 68 shown in FIG. 6 is defined as the electric application instruction only when the door 12 is open.

### Modification 5

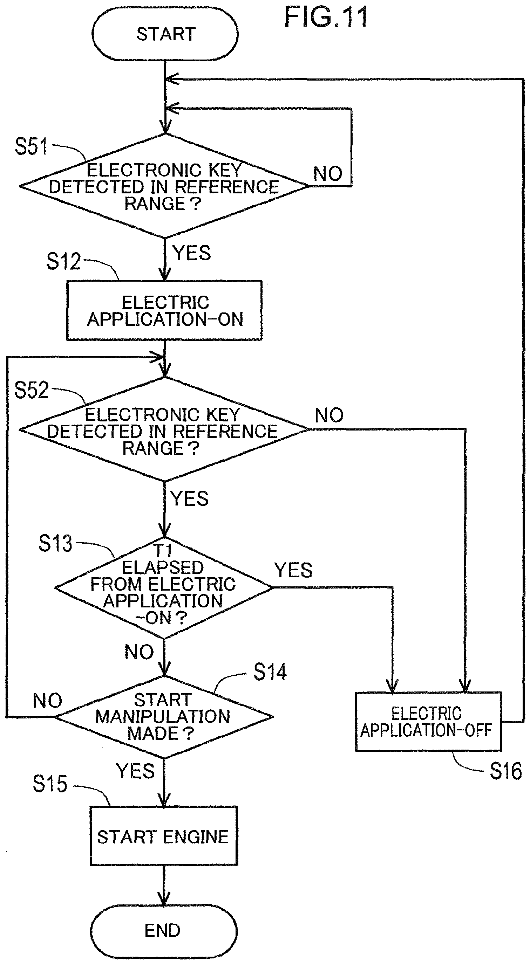

In the fifth embodiment described above, a determination in Step 13 is executed immediately after an electric application is started in Step S12, as shown in FIG. 7. However, the present invention is not limited to this aspect. For example, the present invention may include an aspect according to Modification 5 shown in FIG. 11. In Modification 5, it is determined in Step S52 whether a fifth power consumption suppression condition is satisfied. A battery control section 62 executes a control of suspending the electric application to an electronic device (Step S16) when the fifth power consumption suppression condition is satisfied (NO in Step S52). Details will be described below.

As shown in FIG. 11, a main control part of a controller 6 is configured to execute a control of starting the electric application to each electronic device in an electronic device group in Step S12, and then to determine whether an electronic key is re-detected in a reference range in Step S52. When the electronic key is detected (YES in Step S52), the main control part of the controller 6 is configured to proceed to Step S13. When the electronic key is not detected in the reference range in Step S52 (NO in Step S52), a worker such as an operator carrying the electronic key is supposed to be moved away from a hydraulic excavator 1. In this case, the battery control section 62 proceeds to Step S16, thereby suspending the electric application to the electronic device group.

In Modification 5, the worker such as the operator carrying the electronic key and having moved away from the hydraulic excavator 1 is supposed to have no will to start the engine 2. Therefore, the electric application to the electronic device group is promptly suspended to succeed in suppressing a power consumption of a battery 4.

### Modification 6

The fifth embodiment described above shows an example where it is determined that the electric application instruction described above is received when an electronic key is detected in a reference range. In other words, in the fifth embodiment, the electric application instruction represents a presence of the electronic key in the reference range. However, the present invention is not limited to this aspect. For example, an electric application instruction detection section may be configured to detect a manipulation for the electronic key in the reference range. The electric application instruction may represent the manipulation for the electronic key in the reference range. Examples of the manipulation made for the electronic key in the reference range include a manipulation to unlock a door. However, the manipulation is not limited thereto. When the manipulation is made for the electronic key, the electronic key emits a radio wave corresponding to the manipulation, and a receiver in the electric application instruction detection section receives the radio wave. In this manner, the electric application instruction detection section can detect the manipulation for the electronic key in the reference range.

According to the modification, a detailed manipulation, e.g., a specific manipulation for the electronic key, made by a worker such as an operator is detected as the electric application instruction. Therefore, the electric application can be started at a relatively high possibility of starting the engine 2.

### Modification 7

In each of the embodiments, a control (power consumption suppression control) executed for suppressing a power consumption of a battery 4 when at least one power consumption suppression condition is satisfied includes a control of suspending an electric application to an electronic device. However, the power consumption suppression control is not limited to this aspect. Examples of the power consumption suppression control may include a control of reducing an amount of electricity applied to the electronic device when at least one power consumption suppression condition is satisfied.

### Modification 8

In each of the embodiments, the hydraulic excavator 1 includes the door opening and closing detection section 64, and the door opening and closing detection section 64 is configured to detect an opening manipulation and a closing manipulation for the door 12. However, the present invention is not limited to this aspect. In each of the embodiments, the hydraulic excavator 1 may include a door opening detection section in place of the door opening and closing detection section, and the door opening detection section may be configured to detect only the opening manipulation among the opening manipulation and the closing manipulation for the door 12.

As described above, provided is a construction machine which can suppress a reduction in a residual amount in a battery after an electric application to an electronic device is started.

A provided construction machine includes: an engine; a start manipulation receipt part for receiving a start manipulation to start the engine; a battery for supplying an electric power; and a control device. The control device includes: an engine control section for controlling the engine; a battery control section for controlling the supply of the electric power from the battery; an electric application instruction detection section for detecting an electric application instruction of starting an electric application to an electronic device by supplying the electric power from the battery to the electronic device, the electronic device requiring operation confirmation prior to the start of the engine; and a timer section for measuring an elapsed time from a start of the electric application to the electronic device. The battery control section is configured to execute a control of starting the electric application to the electronic device by supplying the electric power from the battery to the electronic device in response to a detection of the electric application instruction by the electric application instruction detection section. The engine control section is configured to execute a control of starting the engine in a case where the start manipulation is received by the start manipulation receipt part before the elapsed time exceeds a first reference time. The control device is configured to execute a control (power consumption suppression control) of suppressing a power consumption of the battery, when at least one power consumption suppression condition set in advance is satisfied after the electric application to the electronic device is started and before the engine is started.

In the construction machine, the engine control section executes a control of starting the engine in the case where the start manipulation is received by the start manipulation receipt part before the elapsed time from the start of the electric application to the electronic device exceeds the first reference time, and the control device executes the power consumption suppression control when at least one power consumption suppression condition is satisfied after the electric application to the electronic device is started and before the engine is started. Accordingly, even in a case where no start manipulation for starting the engine is made despite the start of the electric application to the electronic device, a wasteful power consumption of the battery is suppressed, and a reduction in a residual amount in the battery is suppressed.

The at least one power consumption suppression condition and the power consumption suppression control are not particularly limited to specific aspects, but are preferably configured, for example, in the following manner.

Preferably, the at least one power consumption suppression condition includes a first power consumption suppression condition that the elapsed time exceeds the first reference time without receiving of the start manipulation by the start manipulation receipt part after the electric application to the electronic device is started, and the battery control section is configured to execute a control of suspending the electric application to the electronic device when the first power consumption suppression condition is satisfied.

In this aspect, the electric application to the electronic device is suspended when no start manipulation is made upon a lapse of the first reference time from the start of the electric application to the electronic device. Consequently, a wasteful power consumption of the battery is effectively suppressed, and a reduction in a residual amount in the battery is effectively suppressed.

Preferably, when the control device further includes a notification control section, the at least one power consumption suppression condition includes a first power consumption suppression condition that the elapsed time exceeds the first reference time without receiving of the start manipulation by the start manipulation receipt part after the electric application to the electronic device is started, and the notification control section is configured to execute a control of notifying that the electric application to the electronic device is to be suspended when the first power consumption suppression condition is satisfied.

In this aspect, the notification executed when the elapsed time exceeds the first reference time can lead an operator to appropriate measures by, for example, reminding the operator that a start manipulation for an engine is not made, and causing the operator to make a manipulation to suspend the electric application to the electronic device. The appropriate measures taken by the operator result in suppressing a wasteful power consumption of the battery, and suppressing a reduction in a residual amount in the battery.

More preferably, the at least one power consumption suppression condition further includes a second power consumption suppression condition that a second reference time set in advance elapses from the notification by the notification control section without making of a continuation manipulation set in advance to continue the electric application to the electronic device, and the battery control section is configured to execute a control of suspending the electric application to the electronic device when the second power consumption suppression condition is satisfied.

In this aspect, the electric application to the electronic device is suspended when the second reference time is elapsed from the notification without making of a continuation manipulation despite the notification. Consequently, a wasteful power consumption of the battery is suppressed, and a reduction in a residual amount in the battery is suppressed. Conversely, when the continuation manipulation is made before the second reference time elapses from the notification, the battery control section may be configured to execute a control of continuing the electric application to the electronic device without executing the control of suspending the electric application to the electronic device upon a lapse of the second reference time from the notification. Further, when the continuation manipulation is made before the second reference time elapses from the notification, the battery control section may be configured to execute a control of suspending the electric application to the electronic device upon a lapse of a time which is set in advance and is longer than the second reference time from the notification.

Preferably, the at least one power consumption suppression condition further includes a third power consumption suppression condition that, in a case where the continuation manipulation is made in a period from the notification to a lapse of the second reference time, the start manipulation is not received by the start manipulation receipt part in a period from the continuation manipulation to a lapse of a third reference time set in advance, and the notification control section is configured to execute a control of re-notifying that the electric application to the electronic device is to be suspended when the third power consumption suppression condition is satisfied.

In this aspect, the re-notification described above can lead an operator again to the appropriate measures by, for example, reminding the operator that the start manipulation for the engine is not made, and causing the operator to make a manipulation to suspend the electric application to the electronic device. The appropriate measures taken by the operator result in suppressing a wasteful power consumption of the battery, and suppressing a reduction in a residual amount in the battery.

Preferably, the control device further includes a door opening detection section for detecting an opening manipulation to open a door of a cab in the construction machine, the at least one power consumption suppression condition includes a fourth power consumption suppression condition that the elapsed time exceeds a fourth reference time set in advance without detecting of the opening manipulation by the door opening detection section after the electric application to the electronic device is started, and the battery control section is configured to execute the control of suspending the electric application to the electronic device when the fourth power consumption suppression condition is satisfied.

Incidentally, Patent Literature 1 proposes a technology for simplifying a start of an engine in the field of construction machines. Specifically, in Patent Literature 1, when a lock lever (13) is at a lock position and a portable key (41) is within an authenticable range, an operator only needs to make a manipulation for a power switch (12) to start the engine (15). However, the construction machine of a push start type described above needs a certain amount of time to check whether a software for an electronic control and an electronic device accurately operate, and thus has a problem of a long waiting time from a turn-on manipulation until the engine is ready to be started. In recent years, the time required for the checking tends to be longer with an increase in the number of devices to be electronically controlled. A resultant waiting time, as described above, gives a lot of stress to the operator. The construction machine of the push start type as disclosed in Patent Literature 1 requires no manipulation of inserting or rotating a key. However, Patent Literature 1 makes no mention of the checking for a software or an electronic device described above. The problem of the waiting time described above still persists in the construction machine disclosed in Patent Literature 1.

Preferably, in order to shorten the waiting time, the electric application instruction includes an instruction based on a behavior taken by a worker such as an operator relevant to the construction machine outside the cab of the construction machine before the engine is started.

In this aspect, the battery control section executes a control of starting an electric application to the electronic device by supplying an electric power from the battery to the electronic device in response to a detection of the electric application instruction by the electric application instruction detection section, based on the behavior taken by the worker such as the operator outside the cab. This control achieves the start of the electric application to the electronic device before the worker such as the operator enters the cab. Consequently, the waiting time since the worker such as the operator sits on an operator seat until the engine is ready to be started can be shortened.

As described above, this aspect is suitable for a construction machine e.g., a hydraulic excavator needing a long waiting time until the engine is ready to be started.

The electric application instruction based on a behavior taken by the worker such as the operator outside the cab is not particularly limited to a specific aspect, but is preferably configured, for example, in the following manner.

Preferably, the electric application instruction detection section is configured to detect an unlocking manipulation to unlock a door of a cab of the construction machine, and the electric application instruction represents the unlocking manipulation. Preferably, the electric application instruction detection section is configured to detect an opening manipulation to open a door of a cab of the construction machine, and the electric application instruction represents the opening manipulation.

In these aspects, each of the unlocking manipulation and the opening manipulation is based on a behavior taken by the worker such as the operator outside the cab. After each of the behavior is taken, there is a relatively high possibility that the engine is started. Accordingly, setting the unlocking manipulation or the opening manipulation as the electric application instruction enables the start of the electric application to the electronic device at an appropriate time in consideration of the possibility of starting the engine before the worker such as an operator enters the cab.

For example, an electric application instruction based on a behavior taken by the operator outside the cab is preferably configured in the following manner.

Preferably, the electric application instruction detection section is configured to detect a presence of an electronic key in a reference range, and the electric application instruction represents the presence of the electronic key in the reference range. Preferably, the electric application instruction detection section is configured to detect a manipulation for an electronic key made in a reference range, and the electric application instruction represents the manipulation for the electronic key in the reference range.

In these aspects, each of the presence of the electronic key in the reference range and the manipulation for the electronic key made in the reference range is based on a behavior taken by the operator carrying the electronic key outside the cab. After each behavior is taken, there is a relatively high possibility that the operator starts the engine. Consequently, these aspects can start an electric application to the electronic device at an appropriate time in consideration of the possibility of starting the engine before the operator enters the cab.

For example, the at least one power consumption suppression condition and the power consumption suppression control are preferably configured in the following manner.

Preferably, the at least one power consumption suppression condition includes a fifth power consumption suppression condition that the electronic key is not detected in the reference range after the electric application to the electronic device is started, and the battery control section is configured to execute a control of suspending the electric application to the electronic device when the fifth power consumption suppression condition is satisfied.

When the electronic key is not detected in the reference range as in this aspect, there is a low possibility that the operator subsequently starts the engine. Accordingly, this aspect can suspend the electric application to the electronic device at an appropriate time.

For example, the electric application instruction based on a behavior taken by the operator outside the cab preferably includes the following instruction.

Preferably, the electric application instruction detection section is configured to detect a presence of an electronic key in a first reference range and a presence of the electronic key in a second reference range closer to the construction machine than the first reference range, and the electric application instruction represents the presence of the electronic key in the second reference range in a period from the detection of the electronic key in the first reference range to a lapse of a fifth reference time.

The presence of the electronic key in the second reference range in a period from the detection of the electronic key in the first reference range to a lapse of a predetermined time (fifth reference time) is based on a behavior taken by the operator carrying the electronic key outside the cab. Additionally, after this behavior is taken, there is a relatively high possibility that the operator starts the engine. Therefore, this aspect can start an electric application to the electronic device at an appropriate time in consideration of the possibility of starting the engine before the operator enters the cab.

Preferably, the construction machine further includes a lock mechanism shiftable between a locked state and an unlocked state, and the engine control section is configured to execute the control of starting the engine in a case where the start manipulation is received by the start manipulation receipt part before the elapsed time exceeds the first reference time, and the lock mechanism is in the locked state.

In this aspect, the engine does not start when the lock mechanism is in the locked state. Therefore, the safety can be further enhanced.

Further, another construction machine to be provided includes an engine; a battery for supplying an electric power; and a control device. The control device includes: an engine control section for controlling the engine; a battery control section for controlling the supply of the electric power from the battery, and an electric application instruction detection section for detecting an electric application instruction of starting an electric application to an electronic device by supplying the electric power from the battery to the electronic device, the electronic device requiring operation confirmation prior to the start of the engine. The battery control section is configured to execute a control of starting the electric application to the electronic device by supplying the electric power from the battery to the electronic device in response to a detection of the electric application instruction by the electric application instruction detection section. The engine control section is configured to execute a control of starting the engine in response to a completion of the operation confirmation after the electric application to the electronic device.

In this construction machine, the engine control section executes a control of starting the engine in response to the completion of the operation confirmation. Therefore, the engine is started without making of the start manipulation by the operator. Consequently, a wasteful power consumption of the battery after the start of the electric application from the battery to the electronic device is suppressed, and a reduction in a residual amount thereof in the battery is suppressed.

## Claims

1. A construction machine, comprising:
an engine;
a start manipulation receipt part for receiving a start manipulation to start the engine;
a battery for supplying an electric power; and
a control device, wherein
the control device includes:
an engine control section for controlling the engine;
a battery control section for controlling the supply of the electric power from the battery;
an electric application instruction detection section for detecting an electric application instruction of starting an electric application to an electronic device by supplying the electric power from the battery to the electronic device, the electronic device requiring operation confirmation prior to the start of the engine; and
a timer section for measuring an elapsed time from a start of the electric application to the electronic device,
the battery control section is configured to execute a control of starting the electric application to the electronic device by supplying the electric power from the battery to the electronic device in response to a detection of the electric application instruction by the electric application instruction detection section,
the engine control section is configured to execute a control of starting the engine in a case where the start manipulation is received by the start manipulation receipt part before the elapsed time exceeds a first reference time set in advance, and
the control device is configured to execute a control of suppressing a power consumption of the battery, when at least one power consumption suppression condition set in advance is satisfied after the electric application to the electronic device is started and before the engine is started.

2. The construction machine according to claim 1, wherein
the at least one power consumption suppression condition includes a first power consumption suppression condition that the elapsed time exceeds the first reference time without receiving of the start manipulation by the start manipulation receipt part after the electric application to the electronic device is started, and
the battery control section is configured to execute a control of suspending the electric application to the electronic device when the first power consumption suppression condition is satisfied.

3. The construction machine according to claim 1, wherein
the control device further includes a notification control section,
the at least one power consumption suppression condition includes a first power consumption suppression condition that the elapsed time exceeds the first reference time without receiving of the start manipulation by the start manipulation receipt part after the electric application to the electronic device is started, and
the notification control section is configured to execute, when the first power consumption suppression condition is satisfied, a control of notifying that the electric application to the electronic device is to be suspended.

4. The construction machine according to claim 3, wherein
the at least one power consumption suppression condition further includes a second power consumption suppression condition that a second reference time set in advance elapses from the notification by the notification control section without making of a continuation manipulation set in advance to continue the electric application to the electronic device, and
the battery control section is configured to execute a control of suspending the electric application to the electronic device when the second power consumption suppression condition is satisfied.

5. The construction machine according to claim 4, wherein
the at least one power consumption suppression condition further includes a third power consumption suppression condition that, in a case where the continuation manipulation is made in a period from the notification to a lapse of the second reference time, the start manipulation is not received by the start manipulation receipt part in a period from the continuation manipulation to a lapse of a third reference time set in advance, and
the notification control section is configured to execute, when the third power consumption suppression condition is satisfied, a control of re-notifying that the electric application to the electronic device is to be suspended.

6. The construction machine according to any one of claims 1 to 5, wherein
the control device further includes a door opening detection section for detecting an opening manipulation to open a door of a cab in the construction machine,
the at least one power consumption suppression condition includes a fourth power consumption suppression condition that the elapsed time exceeds a fourth reference time set in advance without detecting of the opening manipulation by the door opening detection section after the electric application to the electronic device is started, and
the battery control section is configured to execute the control of suspending the electric application to the electronic device when the fourth power consumption suppression condition is satisfied.

7. The construction machine according to any one of claims 1 to 6, wherein
the electric application instruction includes an instruction based on a behavior taken by a worker relevant to the construction machine outside the cab of the construction machine before the engine is started.

8. The construction machine according to claim 1, wherein
the electric application instruction detection section is configured to detect an unlocking manipulation to unlock a door of a cab of the construction machine, and
the electric application instruction represents the unlocking manipulation.

9. The construction machine according to claim 1, wherein
the electric application instruction detection section is configured to detect an opening manipulation to open a door of a cab of the construction machine, and
the electric application instruction represents the opening manipulation.

10. The construction machine according to claim 1, wherein
the electric application instruction detection section is configured to detect a presence of an electronic key in a reference range set in advance, and
the electric application instruction represents the presence of the electronic key in the reference range.

11. The construction machine according to claim 1, wherein
the electric application instruction detection section is configured to detect a manipulation for an electronic key made in a reference range set in advance, and
the electric application instruction represents the manipulation for the electronic key in the reference range.

12. The construction machine according to claim 10 or 11, wherein
the at least one power consumption suppression condition includes a fifth power consumption suppression condition that the electronic key is not detected in the reference range after the electric application to the electronic device is started, and
the battery control section is configured to execute a control of suspending the electric application to the electronic device when the fifth power consumption suppression condition is satisfied.

13. The construction machine according to claim 1, wherein
the electric application instruction detection section is configured to detect a presence of an electronic key in a first reference range set in advance and a presence of the electronic key in a second reference range set in advance to be closer to the construction machine than the first reference range, and
the electric application instruction represents the presence of the electronic key in the second reference range in a period from the detection of the electronic key in the first reference range to a lapse of a fifth reference time set in advance.

14. The construction machine according to any one of claims 1 to 13, further comprising:
a lock mechanism shiftable between a locked state and an unlocked state, wherein
the engine control section is configured to execute the control of starting the engine in a case where the start manipulation is received by the start manipulation receipt part before the elapsed time exceeds the first reference time, and the lock mechanism is in the locked state.

15. A construction machine, comprising:
an engine;
a battery for supplying an electric power; and
a control device, wherein
the control device includes:
an engine control section for controlling the engine;
a battery control section for controlling the supply of the electric power from the battery; and
an electric application instruction detection section for detecting an electric application instruction of starting an electric application to an electronic device by supplying the electric power from the battery to the electronic device, the electronic device requiring operation confirmation prior to the start of the engine,
the battery control section is configured to execute a control of starting the electric application to the electronic device by supplying the electric power from the battery to the electronic device in response to a detection of the electric application instruction by the electric application instruction detection section, and
the engine control section is configured to execute a control of starting the engine in response to a completion of the operation confirmation after the electric application to the electronic device.
